# EUROPEAN PATENT APPLICATION

(11) **EP 2 439 394 A1**
(43) Date of publication of application: **11.04.2012**
(21) Application number: 10187147.3
(22) Date of filing: 11.10.2010
(51) Int. Cl.: F02K 9/34, F02K 9/62, F02K 9/97

(54) **Improved thermal insulation of rocket engines**

(71) Applicant: Nammo Raufoss AS, 2830 Raufoss (NO)
(72) Inventor: Ørbekk, Erland, 2819, Gjøvik (NO)
(74) Representative: Plougmann & Vingtoft A/S

(57) **Abstract**

The present invention is related to an improved thermal insulation of an exhaust tube (8) for use in a rocket engine. The thermal insulation is provided for as a layered structure wherein respective layers comprises a composite material, and wherein dominant directions of fibres in respective adjacent layers are different with respect to each other. In addition, a flexible layer might be used to attach the thermal insulation to an inner wall of the exhaust tube (8).

## Description

### FIELD OF THE INVENTION

The present invention is generally related to the field of thermal insulation of rocket engines and especially to an improved thermal insulation assembly for an exhaust tube outlet from a rocket engine.

### BACKGROUND OF THE INVENTION

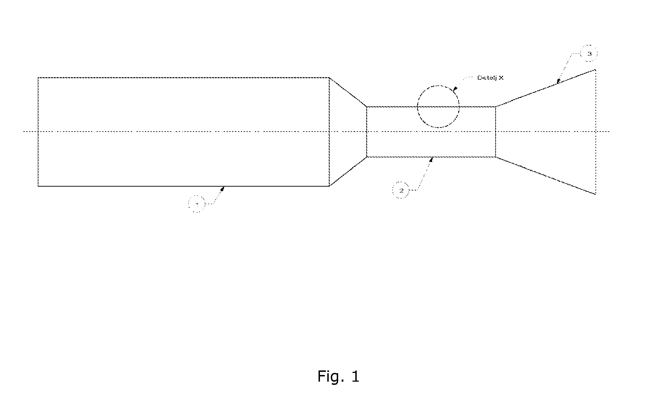

Rocket engines are usually tailor made in the sense that for example a certain payload provided for in a certain given volume has to be delivered airborne with the rocket engine. This may imply certain design constraints on the rocket engine in size and/or shape and output effect etc. The principal layout of a prior art rocket engine is illustrated in fig. 1. A combustion chamber 1 is in operative connection with a nozzle section 3 via an exhaust tube 2. The combustion chamber 2 and the exhaust tube 2 are usually located inside the body of a rocket that is to be used for thrusting the payload forward or upwards. Usually the exhaust tube has a smaller diameter than the combustion chamber providing space inside the rocket body for electronics etc., as known to a person skilled in the art. The burning of a rocket motor creates a high pressure in both the combustion chamber 2 and the exhaust tube 3 subjecting the structural elements to high stresses.

Rockets can be subject to extreme variations in temperature range. For example, if a rocket is attached to a jet fighter, outdoor temperatures can be very low when the jet fighter is flying high up in the sky. When the rocket is fired the temperature inside the combustion chamber can rise immediately towards 3000 °C. Therefore the rocket engine and the total rocket assembly may be subject to rapid temperature variations between for example minus 60 °C and plus 3000 °C. This extreme temperature interval is therefore a design challenge when designing rocket engines and rockets. In addition there is also an understandable implicit requirement that the rocket body comprising a rocket engine should be as light weighted as possible to increase the possible payload the rocket may be able to carry.

The external temperature requirements and the design problems these requirements may provide is further enhanced by the thermal loading of the different components of the rocket. With reference to figure 1, the space around the exhaust tube 2 that provides space for other system components of the rocket like steering controllers, sensor electronics etc. may be subject to an extreme heating from the exhaust tube 2 when the exhaust gasses are being transported through the exhaust tube 2 during firing of the rocket. The temperature might also be so high that steel and/or aluminium in the exhaust tube body may melt down due to the high temperature. The exhaust gas may be compared to a blowtorch in effect. In rockets the hot gases are provided for by the combustion of solid or liquid fuel in the combustion chamber 1 and the hot exhaust gases are accelerated through the exhaust tube 2 and the nozzle section 3. The actual combustion may last for a time interval between fractions of seconds to several minutes or more if necessary. Therefore, besides providing an extreme heating the acceleration provides also a mechanical stress or loading on the structural components of the rocket.

In prior art it is known to provide a thermal insulating layer on the inner walls of the exhaust tube 2. Pieces of thermally insulating composite fibre materials are formed and attached to each other and to the inner walls of the exhaust tube for example with epoxy glue. The thermally insulating materials consist typically of composite fibre materials which are sacrificed through thermal degrading in order to protect the structural material of the exhaust tube 2. It is known in prior art that thermal protection materials often are brittle materials which crack easily under loading and sometimes even already minor cracks will be formed during manufacturing. These cracks will typically follow parallel to the dominant fiber direction or directions in the composite fibre material. It is also known that epoxy glue might become brittle and crack when exposed to extreme conditions. If this happens between two segments of insulating material or at those places where a small manufacturing flaw exists in the insulating segment, an opening may be present from the inside of the exhaust tube through the insulating layer making it possible for the hot exhaust gasses to come into contact with the structure of the rocket body, heating the electronics or even make a hole in the body of the rocket. Further, it is also known in prior art that pieces of the insulating material may be torn away from the insulating layer. This process may be compared and viewed upon as an erosion process of the heat insulating material.

In prior art it is usual that the development of a specific rocket design involves an iterative process wherein a initial proposal of the design is tested and eventually any defects are corrected by for example adjusting the thickness of the rocket body walls and/or the insulating layer etc. and then the improved design is tested again until a design that works is identified. Therefore there is a need for an improved insulation layer design for rocket engines withstanding thermal and mechanical loads and at the same time prevents any formations of channels that can lead or deviate hot exhaust gasses towards any structural elements of the rocket body or any other components (electronic and mechanical) that constitute the complete rocket assembly.

### OBJECT OF THE INVENTION

It is a further object of the present invention to provide an alternative to the prior art.

In particular, it may be seen as an object of the present invention to provide a thermal insulation layer design for rocket engines that solves the above mentioned problems of the prior art, wherein the thermal insulating layer design itself comprises a layered structure, wherein each respective layer in the layered structure provides a certain material feature to the complete thermal insulating layer design.

### SUMMARY OF THE INVENTION

Thus, the above described object and several other objects are intended to be obtained in a first aspect of the present invention by providing a layered structure for a thermal insolating layer design for a rocket engine comprising a first layer, wherein a first side of the first layer is facing towards hot exhaust gases in an exhaust tube of the rocket engine, wherein the first layer comprises a heat resistant composite material (material type one), wherein a dominant direction of material fibres in the first layer is arranged towards the hot exhaust gases, on a second side of the first layer, opposite the side facing towards the exhaust gases, a second layer comprising a composite material (material type two) is arranged, wherein a dominant direction of material fibres in the material of the second layer is different than the direction of the fibres in the material of the first layer.

The present invention is particularly, but not exclusively, advantageous for obtaining a thermal insulation of an exhaust tube in a rocket engine and at the same time providing a robust protection against unwanted exhaust gas leakage through the insulation material. In addition the thermal insulation layer design is modular and may comprise a plurality of layers wherein each layer comprises materials and/or structural features adding respective technical features to the complete thermal insulating layer design.

According to an example of embodiment of the present invention the layered thermal insulating layer design is glued to the inside walls of the rocket engine exhaust tube.

According to another example of embodiment of the present invention the thermal insulating layer design is attached to the inner walls via a third layer comprising a flexible or elastic material. Each respective side of the flexible or elastic material can be glued to respectively the inner walls of the exhaust tube and a surface of the thermal insulating layer design. The flexible or elastic material used in this third layer can be a material from the group of materials referenced as Room Temperature Vulcanized (RTV) rubber. Alternatively, glue that is flexible after curing can be used to provide both attachment and flexibility or elasticity.

According to yet another example of embodiment of the present invention, a thermal insulating layer design may comprise a plurality of a composition of a respective layer with type 1 material adjacent to a layer with type 2 materials.

According to an aspect of the present invention, material type one and material type two may be the same type of material but is assembled with a respective different dominant direction of fibres with respect to each other when used in a thermal insulating layer design according to the present invention.

According to another aspect of the present invention, materials in different layers of the thermal insulating layer design may be of different material types.

Different respective aspects of the present invention may each be combined with any of the other aspects. These and other aspects of the invention will be apparent from and elucidated with reference to the embodiments described hereinafter.

### BRIEF DESCRIPTION OF THE FIGURES

The layered thermal protection design for a rocket engine according to the present invention will now be described in more detail with reference to the accompanying figures. The figures show one way of implementing the present invention and is not to be construed as being limiting to other possible embodiments falling within the scope of the attached claim set.
Figure 1 illustrates a typical prior art rocket engine.
Figure 2 illustrates an example of embodiment according to the present invention.

### DETAILED DESCRIPTION OF AN EMBODIMENT

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

A rocket engine assembly according to the present invention comprises a thermal insulated tube functioning as a tube for transporting hot combustion gases from the combustion chamber of the engine to a nozzle at the outlet end of the rocket. In the combustion chamber, the velocity of the gases and particles are low (near zero) until they are accelerated through the exhaust tube and into the nozzle. The gas (and particle) velocity is relatively high in the exhaust tube and the mechanical load or stress on the structure and the thermal load on the same structure is complex to handle. In prior art the thermal insulating materials that are used often comprises brittle fibrous composite materials which may crack under extreme thermal loads which are present in rocket engine exhaust tubes.

An important aspect of the present invention is to assemble the thermal insulating layer design into a component that acts as if it is one single component.

This aspect makes it possible to avoid or reduce the risk of cracks in the thermal insulation assembly thereby avoiding channels through the thermal insulating layer design for hot exhaust gases.

The part of the thermal insulating layer design that is in direct contact with the hot accelerating gases and particles are subject to extreme mechanical and thermal loads. This environment may provide erosion of the thermal insulating material as described above. To increase the strength of this material and make the material more sustainable it is possible to arrange the fibres in the composite material in a dominant direction towards the hot exhaust gasses, i.e. the fibres should be arranged preferably perpendicular to the inner walls of the exhaust tube. However, it is within the scope of the present invention that any angle of the fibres might be used as long as the dominant directions of the fibres are different from a dominant direction of fibres in an adjacent layer as described below.

However, such a dominant direction of fibres in the layer facing towards the hot exhaust gases may weaken the material in a direction towards the inner walls of the exhaust tube and a cracking of the material might provide a channel for hot exhaust gases as described above.

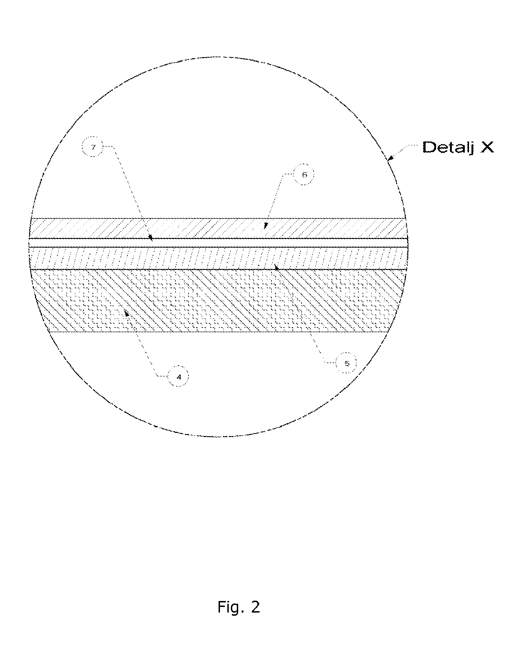

With reference to figure 2, a layered structure for a thermal insulating layer design for a rocket engine according to the present invention is illustrated. The thermal insulating layer design comprises a first layer 4, wherein a first side of the first layer 4 is facing towards hot exhaust gases in an exhaust tube 2 of the rocket engine, wherein the first layer 4 comprises a heat resistant composite material (material type one), wherein a dominant direction of material fibres in the first layer 4 is arranged towards the hot exhaust gases. On a second side of the first layer 4, opposite the side facing towards the exhaust gases, a second layer 5 comprising a composite material (material type two) is arranged, for example attached with epoxy glue or directly bonded together during the manufacturing process, wherein a dominant direction of material fibres in the material of the second layer 5 is arranged different than the direction of the fibres in the material of the first layer 4. The effect of providing a different dominant fibre direction in the adjacent layer 5 is to provide a structural strengthening of the material in layer 4 and at the same time is providing a barrier with respect to leakage of exhaust gases (and particles) towards the inner wall of the exhaust tube if such a leakage should occur anyhow.

According to yet another aspect of the present invention, mechanical stress might cause problems also. The extreme acceleration of the rocket or the large thermal loadings might tear the rocket assembly apart. To mitigate effects of mechanical stress or loading on the insulating layer design of the rocket engine, a flexible bonding 7 of layer 5 to the inner wall of the exhaust tube is possible. The flexible feature of the bonding will mitigate the transfer of forces as known to a person skilled in the art. The flexible bonding might be achieved by using epoxy glue that is somewhat fluidic after curing. According to another example of embodiment of the present invention, a layer 7 comprising room temperature vulcanized (RTV) rubber is located in between layer 5 and the inner wall of the exhaust tube. In both examples the flexible layer 7 will function as a sealing against leakage of exhaust gasses as well.

As readily understood, a design comprising a first layer 4 with a first dominant fibre direction adjacent to a second layer 5 with a different second fibre direction may be repeated to increase the structural robustness of a thermal insulating layer design and at the same time increase protection against leakage of exhaust gases. For example, layer 4 and 5 is arranged as depicted in figure 2. In addition, adjacent to layer 5 a third layer is arranged with a different dominant fibre direction compared to layer 4 and 5. A forth layer might be arranged adjacent to the third layer and so on. According to an example of embodiment of the present invention the thermal insulation of the exhaust tub 8 comprises a plurality of different composite material layers, wherein at least two adjacent layers have different dominant fibre directions.

It is within the scope of the present invention that the materials used in different layers are the same type of composite materials, but the materials can be different in some of the layers. Differences in the type of material used in respective layers may be related to different materials used in fibres, length of fibres, diameters of fibres, different resins etc.

According to an aspect of the present invention, the composite materials of the layer 4 and 5 might be assembled differently. Typically, in an example when manufacturing layer 4, sheets of fibre material is stacked upon each other and is being arranged relative to each other such that the selected dominant fibre direction is achieved, for example at 45 degrees relative to the stacking direction.

When manufacturing the composite material for layer 5, fibres may for example be arranged as circles oriented perpendicular relative to the direction of the transport of exhaust in the exhaust tube 8. A long thread of fibres might be wound up as if it was wound up on a cylinder.

In an example of embodiment of the present invention, composite materials for layers 4 and 5 may be glass or carbon fibre reinforced phenolic or epoxy resins, in which the reinforcement fibres may comprise respectively continuous and/or chopped fibres. For the flexible bonding layer 7, both epoxy adhesives with or without filler materials enhancing its properties, as well as rubber based flexible adhesives like RTV (Room temperature Vulcanizing Rubber) are good examples.

## Claims

1. A thermally insulated exhaust tube (8) for use in a rocket engine, **characterized in that** the thermal insulation of the exhaust tube (8) comprises a layered structure comprising a first layer (4), wherein a first side of the first layer (4) is facing towards hot exhaust gases in the exhaust tube (8) of the rocket engine, wherein the first layer (4) comprises a heat resistant composite material of material type one, wherein a dominant direction of material fibres in the first layer (4) is arranged towards the hot exhaust gases, on a second side of the first layer (4), opposite the first side of the first layer (4), a second layer (5) comprising a composite material of material type two is arranged, wherein a dominant direction of material fibres in the material of the second layer (5) is different from the direction of the fibres in the material of the first layer (4).

2. The thermally insulated exhaust tube (8) according to claim 1, wherein the composite material of the second layer (5) is manufactured by wounding a thread of fibres in a circle pattern along the direction of transport of exhaust gases and particles in the exhaust tube (8).

3. The thermally insulated exhaust tube (8) according to claim 1, wherein a third layer (7) is arranged in between the second layer (5) and an inner wall of the exhaust tube (8), wherein a material used for the third layer (7) is providing a flexible or elastic bonding of the second layer (5) to the inner wall of the exhaust tube (8).

4. The thermally insulated exhaust tube (8) according to claim 1, wherein the layered insulation of the exhaust tube (8) comprises a plurality of composite material layers, wherein at least two adjacent layers have different fibre directions relative to each other.

5. The thermally insulated exhaust tube (8) according to claim 3, wherein the third layer (7) is a material layer comprising a material from the group of materials referenced as room temperature vulcanized rubber.

6. The thermally insulated exhaust tube (8) according to claim 3, wherein the third layer (7) is a layer of epoxy glue having a certain flexibility left after curing.

7. The thermally insulated exhaust tube (8) according to claim 1, wherein the composite material of the first layer (4) is manufactured by stacking sheets of fibrous containing materials on top of each other, providing a dominant direction of fibres relative to each other within a specified range of directions.

8. The thermally insulated exhaust tube (8) according to claim 1, wherein the material type one of the first layer (4) and the material type two of the second layer (5) is the same type of material.

9. The thermally insulated exhaust tube (8) according to claim 1, wherein the material type one of the first layer (4) and the material type two of the second layer (5) are different types of materials.

10. The thermally insulated exhaust tube (8) according to claim 1, wherein the material type one of the first layer (4) and the material type two of the second layer (5) is from the group of materials comprising glass, carbon or silica fibre reinforced phenolic or epoxy resins.

11. The thermally insulated exhaust tube (8) according to claim 1, wherein the material type one of the first layer (4) and the material type two of the second layer (5) comprises reinforcement fibres that are respectively continuous and/or chopped fibres.
